# EUROPEAN PATENT APPLICATION

(11) **EP 4 834 514 A2**
(43) Date of publication of application: **04.11.2026**
(21) Application number: 26175968.2
(22) Date of filing: 30.04.2026
(51) Int. Cl.: B23K 9/32, B23K 26/16, B23K 26/142

(54) **SYSTEMS AND METHODS FOR CENTRALIZED FUME GUN AIRFLOW BOOST**

(30) Priority: 30.04.2025 US 202563797645 P; 30.06.2025 US 202563836084 P; 29.04.2026 US 202619662105
(71) Applicant: Illinois Tool Works Inc., Glenview IL 60025 (US)
(72) Inventor: SOMMERS, Eric, Glenview, 60025 (US); KOPAC III, Jordan J., Glenview, 60025 (US); SCHNEIDER, Joseph C., Glenview, 60025 (US)
(74) Representative: HGF

(57) **Abstract**

Disclosed example fume evacuation systems include: a welding power supply contained within a housing; and a boost system comprising a motor and a fan configured to draw in air from a source capture fume gun, the motor arranged within the housing.

## Description

### RELATED APPLICATIONS

The present application claims the benefit of U.S. Provisional Patent Application Serial No. 63/797,645, filed April 30, 2025, entitled "SYSTEMS AND METHODS FOR CENTRALIZED FUME GUN BOOST PUMP," and of U.S. Provisional Patent Application Serial No. 63/836,084, filed June 30, 2025, entitled "SYSTEMS AND METHODS FOR CENTRALIZED FUME GUN BOOST PUMP." The entireties of U.S. Provisional Patent Application Serial No. 63/797,645 and U.S. Provisional Patent Application Serial No. 63/836,084 are expressly incorporated herein by reference.

### FIELD OF THE DISCLOSURE

This disclosure relates generally to welding fume capture and, more particularly, to systems and methods for centralized fume gun airflow boost.

### BACKGROUND

A wide range of industrial, commercial, hobby and other applications result in airborne components that can be removed with proper extraction and filtering. Metal working operations, for example, range from cutting, welding, soldering, assembly, and other processes that may generate smoke and fumes. In smaller shops it may be convenient simply to open ambient air passages or to use suction or discharge air from fans to maintain air spaces relatively clear. In other applications, enclosed and/or cart-type fume extraction systems are used. In industrial settings, more complex fixed systems may be employed for extracting fumes from specific works cells, metal working locations, and so forth. In other settings, such as machine shops, woodworking shops, worksites where cutting, sanding and other operations are performed, dust, fumes, particulate and other types of airborne components may be generated that it may be desirable to collect and extract from work areas and controlled spaces.

A number of systems have been developed for fume extraction, and a certain number of these are currently in use. In general, these use suction air to draw fumes and smoke from the immediate vicinity of the metal working operation, and to filter the fumes and smoke before returning the air to the room or blowing the air to an outside space.

Further improvements are needed, however, in fume extraction systems.

### SUMMARY

The present disclosure provides improvements to conventional fume extraction designs. Example systems can control fume suction from a welding tool during a welding operation, in particular, by drawing fumes from the welding tool to a fume extraction installation system. These and other features and advantages of the present invention will be apparent from the following detailed description, in conjunction with the appended claims.

### BRIEF DESCRIPTION OF THE DRAWINGS

The benefits and advantages of the present invention will become more readily apparent to those of ordinary skill in the relevant art after reviewing the following detailed description and accompanying drawings, wherein:
FIG. 1 illustrates example fume extraction systems, in accordance with aspects of this disclosure.
FIG. 2 illustrates an example fume extraction system with airflow boost, in accordance with aspects of this disclosure.
FIG. 3 illustrates an example airflow boost system for use with a source capture fume extraction system, in accordance with aspects of this disclosure.
FIG. 4 illustrates another example fume extraction system with an airflow boost system, in accordance with aspects of this disclosure.
FIG. 5 illustrates another example fume extraction system with an airflow boost system, in accordance with aspects of this disclosure.

The figures are not necessarily to scale. Where appropriate, similar or identical reference numbers are used to refer to similar or identical components.

### DETAILED DESCRIPTION

Disclosed are systems and methods for fume extraction control. In particular, a fume extraction system, such as for a welding operation, includes one or more motors to control fume suction airflow. In some examples, a welding torch performs a welding operation on one or more workpieces, thereby creating fumes, debris, etc.

Conventional fume extraction systems operate at a distance from the work environment, often restricting an operator's movements during welding. For example, an operator in need of fume extraction may have to conduct welding at a specific location within a facility that is equipped with fume mitigation systems.

For instance, fume extraction systems typically take one of three forms. One type of system is a large centralized system with fume arms or hoods, which may be expensive, stationary, and most useful for a shop with one or more fixed-site weld cells in need of fume extraction.

Another fume extraction system can have fume extraction arms and/or hoods, similar to a centralized system, but can be equipped with a power source, and be movable (e.g., mounted on wheels). The system is mobile and can be moved between different weld cells within a shop. However, even these mobile systems can be quite large, and may not be suited for small welding operations and/or field work.

Yet another type of fume extraction system is a source capture device integrated with a welding torch (i.e. fume gun). These systems may be attached to a metal inert gas (MIG) torch, with fume extraction nozzles and/or conduits built into and/or attached to the welding torch itself. The fume extraction conduits attached to the welding torch are connected to a suction source, e.g., an air suction system with a motor capable of high vacuum fume extraction.

In disclosed examples, an amount of suction provided from a fume extraction system during a welding operation is controlled. Such control can be implemented remotely and "on the fly" during a welding operation and/or in response to changing welding operations. For example, welding operations may employ fume extraction source capture systems, which include fume nozzles and/or fume extraction conduits/hoses on or near a tip of the welding torch. The fume nozzles are connected to a high speed, high flow fume extraction unit. However, certain welding positions/applications operate most effectively with different amounts of suction. In order to avoid evacuation of needed shielding gases (and avoid possible weld porosity issues stemming therefrom), the fume extraction system can be controlled, as disclosed herein.

In an example, the amount of suction is remotely adjusted during welding by controlling a speed of a variable-frequency drive (VFD) motor that provides negative airflow into the fume extraction system from the fume nozzle. The motor may have a power of approximately 0.1-100 horsepower, enabling the motor to power a single or multiple fume source capture device. In some examples, valving or other suitable devices can be controlled to adjust the suction flow for a given welding torch. In particular, multiple welding torches (e.g., equipped with source capture devices) can be connected to a single fume extraction unit (e.g., via a single hose or multiple hoses). The valves/adjustment devices can be controlled individually to control the suction flow at the point of welding, independent of any other welding torch/welding site.

Control circuitry can be incorporated within the fume extraction system, on the welding torch itself, an associated robot welding system, and/or with another related machine (e.g., a wire feeder, welding power source, remote control). Suction flow may be controlled by a computing platform or control circuitry, such as in response to a monitored condition (e.g., via one or more sensors) and/or based on one or more parameters of an associated welding system (e.g., power output, wire feed speed, etc.). Sensor data of the monitored conditions may be used to determine if an adjustment in suction flow is needed, provide an alert to an operator as to the changing conditions, and/or control an adjustment to the system automatically. Control can be automatic (e.g., in response to one or more conditions monitored by sensors,) and/or in response to a user input (e.g., an input via a trigger, knob, pedal, touchscreen, etc.).

Advantageously, the disclosed fume extraction system provides the ability to hook fume guns up into a centralized fume extraction system.

According to aspects of this disclosure, example fume evacuation systems include: a welding power supply contained within a housing; and a boost system comprising a motor and a fan configured to draw in air from a source capture fume gun, the motor arranged within the housing.

In some example fume evacuation systems, the housing includes: an air inlet to receive airflow from the source capture fume gun; and an air outlet to expel the airflow from the housing. In some example fume evacuation systems, the air inlet is connected to the source capture fume gun via a first airflow conduit. In some example fume evacuation systems, the air outlet is connected to a centralized fume collection system via a second airflow conduit.

In some example fume evacuation systems, the motor has a power of approximately 0.3-3 horsepower. In some example fume evacuation systems, the fan driven by the motor is capable of providing a volume flow rate between approximately 10-100 cubic feet per minute (CFM). Some example fume evacuation systems further include a valve to control airflow between the boost system and the source capture fume gun. Some example fume evacuation systems further include a valve to control airflow between the boost system and a centralized fume extraction system.

According to aspects of this disclosure, example fume evacuation systems include: a centralized fume collector; one or more ducts extending from the fume collector, the ducts to receive airflow from a work environment; and one or more boost systems arranged along the ducts to increase airflow through one or more of the ducts.

In some example fume evacuation systems, the one or more boost systems include a motor and a fan configured to draw in air from an inlet or hose. In some example fume evacuation systems, the inlet or hose is connected to a source capture fume gun. Some example fume evacuation systems further include control circuitry to receive commands from the source capture fume gun to activate a first one of the one or more boost systems in response to initiation of a welding operation. Some example fume evacuation systems further include a sensor to generate and transmit the commands based on one or more measured parameters. In some example fume evacuation systems, the sensor is one or more of a voltage sensor, a current sensor, a heat sensor, a light sensor, an inductive sensor, a magnetic sensor, or a trigger.

Some example fume evacuation systems further include a boost system housing for one of the one or more boost systems, the motor being positioned within the boost system housing. In some example fume evacuation systems, the boost system housing is mounted to the one or more ducts. In some example fume evacuation systems, the fan driven by the motor is capable of providing a volume flow rate between approximately 35 cubic feet per minute (CFM). In some example fume evacuation systems, the fan driven by the motor is capable of providing a volume flow rate between approximately 35 cubic feet per minute (CFM) at each of a plurality of welding tools connected to the one or more boost pumps.

When introducing elements of various embodiments described below, the articles "a," "an," and "the" are intended to mean that there are one or more of the elements. The terms "comprising," "including," and "having" are intended to be inclusive and mean that there may be additional elements other than the listed elements. Moreover, while the term "exemplary" may be used herein in connection to certain examples of aspects or embodiments of the presently disclosed subject matter, it will be appreciated that these examples are illustrative in nature and that the term "exemplary" is not used herein to denote any preference or requirement with respect to a disclosed aspect or embodiment. Additionally, it should be understood that references to "one embodiment," "an embodiment," "some embodiments," and the like are not intended to be interpreted as excluding the existence of additional embodiments that also incorporate the disclosed features.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein, the terms "first" and "second" may be used to enumerate different components or elements of the same type, and do not necessarily imply any particular order.

As used herein the terms "circuits" and "circuitry" refer to any analog and/or digital components, power and/or control elements, such as a microprocessor, digital signal processor (DSP), software, and the like, discrete and/or integrated components, or portions and/or combinations thereof, including physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

The terms "control circuit," "control circuitry," and/or "controller," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards that form part or all of a controller.

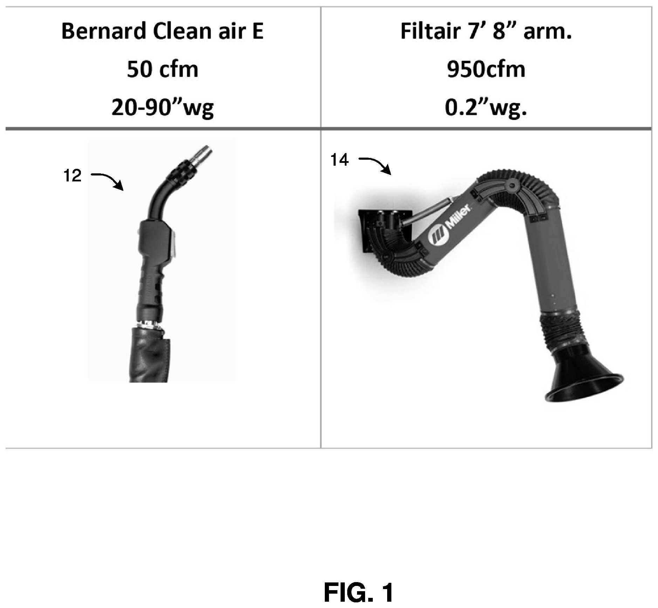

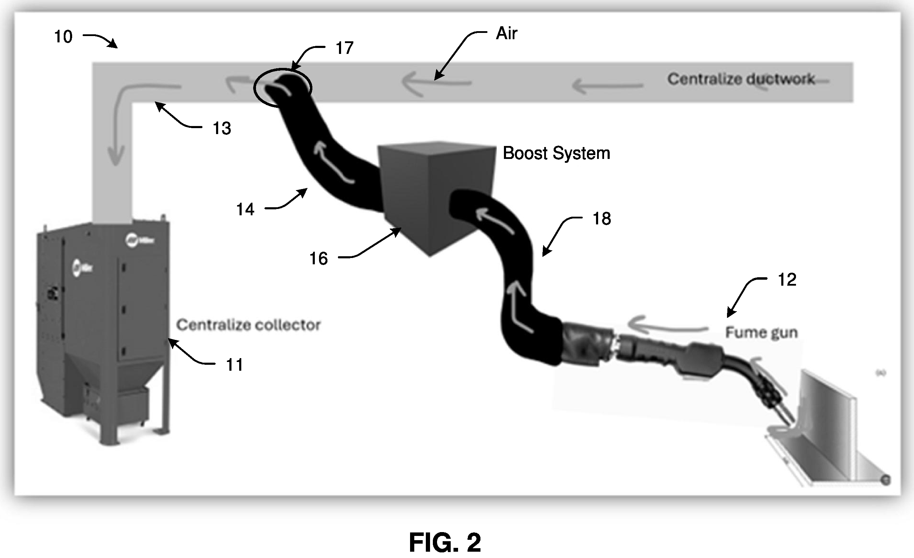

Turning now to the drawings, FIG. 1 illustrates example fume extraction systems, in accordance with aspects of this disclosure. In the world of welding, there are two main types of fume extraction when it comes to fluid dynamics. There are fume guns 12, that utilize a high vacuum, with low volume airflow. Centralized systems 10 (shown in FIG. 2) with arms and hoods 15, on the other hand, operate on high-volume airflow, low vacuum.

Because of the differences in airflow requirements for the two types of fume extraction systems, the airflow needs are incompatible. In other words, the various components, including motors, fans, power sources, ducting, etc., may be specifically tailored for one system, and not effective for the other. The fume gun 12 (e.g., source capture system, is connected to a high vacuum system similar to a Miller F215), whereas the larger conduit 14 is connected to a high-volume system (e.g., similar to a centralized Filtair system). Even though a room enabled system could run fume extraction stations from a centralized system 11, each arm 14 lacks the vacuum or suction required for effective fume extraction for source capture.

As fume guns 12 are becoming more widely adopted, multiple fume guns may be used in a single facility, which may be fitted with a centralized fume extraction system. To facilitate connection of the multiple fume guns into the centralized system, a boost system 16 can be incorporated into the centralized system's ductwork, which effectively increases the airflow at the fume gun 12 workstation, as shown in FIG. 2.

As shown in FIG. 2, a boost system 16 is put inline between the fume gun and centralized ductwork (e.g., along a conduit, within a conduit, at an interface between the conduit/hood and a separate conduit 18, connected to the fume gun 12). This way, the boost system 16 will be able to extract an increased amount of air by raising the vacuum capabilities at the fume gun 12, directing the fumes/particles/contaminated air into the centralized ductwork 13 via one or more couplers, connectors, and/or joints 17, the ductwork 13 being directed to a centralized collector. There, it joins the main air stream through the centralized ductwork, which is ultimately fed to filters within the centralized system 10.

The purpose of arranging a boost system 16 inline is to allow operators to refigure an existing centralized low vacuum fume evacuation system to accommodate high vacuum fume guns and source capture. In examples, the boost system 16 can connect to a centralized system 10 via a fume evacuation arm 14 in a straightforward way. The addition of the boost system 16 assists with moving air over longer distances and provides the extra "boost" needed for source capture by putting a fan closer to the source capture, between the fume gun and the main collector.

In some examples, the boost system 16 houses a motor 120 (e.g., a fixed speed motor, a variable speed motor, a VFD, etc.) and a fan wheel, the motor 120 and the fan capable of generating vacuum sufficient to draw in fumes from the fume gun 12. For instance, the motor 120 and the fan wheel can generate approximately 10-100 cfm at high vacuum. The boost system 16 can be connected to the ductwork trunkline 13 via conduit 14, as shown in FIG. 2. In some examples, the boost system 16 can be mounted externally, along the trunkline or on the wall, and connect to the fume gun 12 via a second hose like shown in the picture is routed to the trunkline. While a single fume gun is shown in FIG. 2, this disclosure is not limited to a single fume gun connected to each boost pump, which can support two or more fume guns.

In some examples, the high vacuum cfm (e.g., between 10-100 cfm, approximately 35 cfm, etc.) can be measured at each of a number of welding tools/torches connected to the boost system.

To that end, the motor 20 can be sized appropriately to accommodate multiple fume guns. Each fume gun can be connected to a separate conduit 18. The booster pump directs airflow to the centralized system 10, which houses filter media to filter particulates and contaminants from the welding operation. In some examples, one or more filters are arranged within the housing 22, e.g., at the inlet or outlet of the housing 22.

In some examples, the boost system 16 can be configured to automatically start and/or stop with the centralized system 10 and/or the fume gun 12. In some examples, a manual switch is provided, and/or a switch operable via some remote computing platform (e.g., remote control).

In examples with multiple fume gun inputs, one or more valves and/or ports (e.g., valves, louvers, actuators, alerts, etc.) can be controlled, engaged, activated, and/or manipulated to direct airflow from the desired activated source input, such as through synchronization with the welding torch 12 or the centralized system 10. In other words, the one or more valves and/or ports can be opened/closed to ensure vacuum suction is available only at the fume gun conduits 18 as are in operation.

The boost system 16 is configured such that no filter is needed, thereby avoiding loss of airflow through the filter. In such cases, there may be an uninhibited pathway between conduits 18 and 14, as the fumes are passed to the ductwork 13 via a coupler (e.g., a T- connector) 17. In other examples, the motor speed is adjustable with different applications (e.g., POT or VFD).

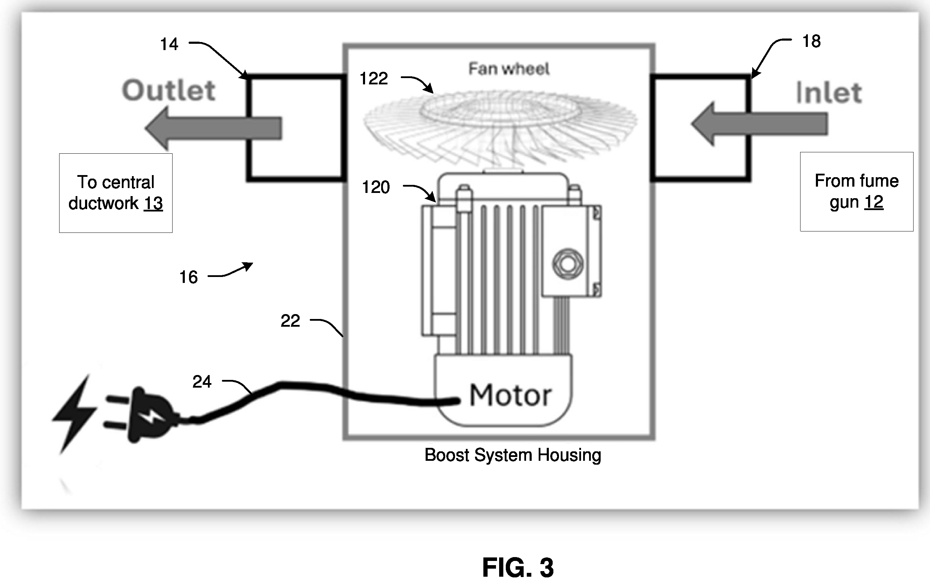

As shown in FIG. 3, the motor may be powered by a 120V mains power, but is not limited to that voltage, or even that power source. For instance, power for the boost system 16 may come from a generator (e.g., engine driven, from a work truck, etc.), and/or from a battery/energy storage device, or in the case of being mounted within a welding power source, the motor may be powered from an auxiliary power source derived within the welding power source (e.g. via a transformer, step down power supply, etc.).

In some examples, modifications (e.g., retrofitting) may be made to equipment such as shop vacuum systems, existing evacuation installations, and so forth, in order to yield the benefits of the disclosed boost systems. It is also contemplated that structures and teachings based on those set forth herein may be employed in specific settings to provide enhanced fume and airborne component collection.

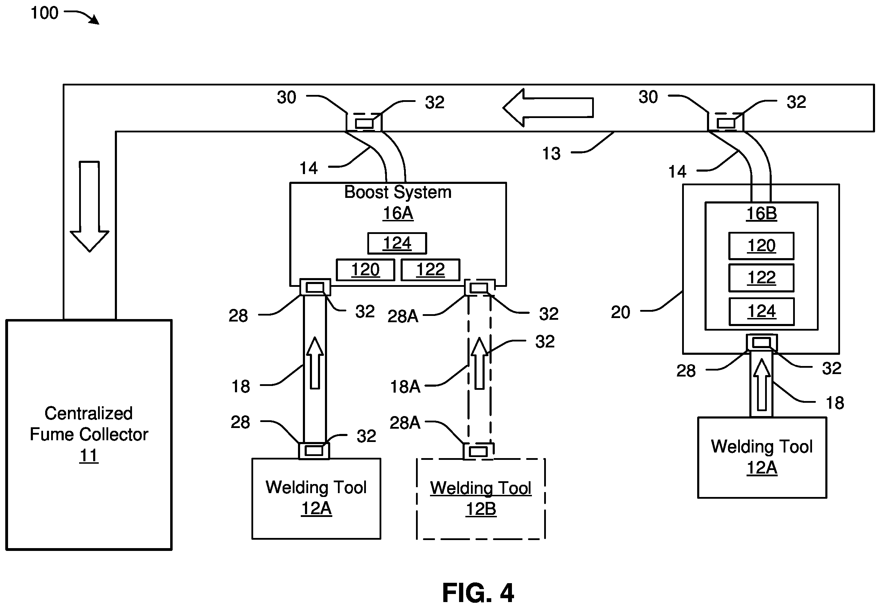

FIG. 4 illustrates another example fume evacuation system 100. As shown, one or more boost systems 16A, 16B can be connected to the ductwork 13 of the system 100, which directs airflow at a high volume/low vacuum towards the centralized fume collector 11.

The boost system 16A can be mounted to the ductwork 13, be it directly, via one or more couplers, and/or at an adjacent position and connected via one or more conduits 14. As shown, the boost system 16A includes a motor 120 to drive a fan 122 configured to draw in air from an inlet or conduit 18, 18A and expel the air to the ductwork 13 via conduits 14, 14A at a higher flow speed than the airflow within the ductwork 13. The conduit 18, 18A can connect to the boost system 16A via a coupler. An airflow regulator 28, such as a valve, a diaphragm, and/or another type of airflow regulator, can be located at the couplings from the welding tool 12A and/or to the boost system 16A. In some examples, regulators 28 can be attached to and/or incorporated with a coupler. The regulators 28 can be configured to open and/or close the airflow pathways, including partially opening/closing the pathway to regulate the airflow therethrough.

In some examples, the regulators 28 can be controlled remotely, such as by remote control of an actuator/solenoid, which can be responsive to an operator input (e.g., via a user interface at a remote computer, such as a smartphone or remote control, and/or the welding tool 12A), and/or an automatic response to a trigger pull, change in power output (e.g., during a welding operation), and/or other change in condition. For example, one or more sensors 32 may be arranged at, near, and/or remote from the regulators to monitor changing conditions in airflow, at the power supply, and/or the welding tool. These conditions can include changes in pressure, airflow direction, temperature, as well as conditions at one or more components of the system (e.g., power output, an arc, etc.). The sensors 32 can be one or more of a voltage sensor, a current sensor, a heat sensor, a light sensor, an inductive sensor, a magnetic sensor, and/or a switch, as a list of non-limiting examples.

The sensors can be configured to generate and transmit the commands based on one or more measured parameters. In examples, control circuitry 124 can be included with the boost system 16A to receive commands from the welding tool 12A (and/or remote control) to activate the motor 120 of the boost system in response to a change in condition (e.g., change of airflow, initiation of a welding operation, etc.). The sensors can provide a measurement of the changed condition, transmitted to the control circuitry 124 via wired or wireless communication channels.

Moreover, the control circuitry 124 can be operable to control movement of the motors 120. In some examples, the motor 120 can be controlled by the operator and/or sensor feedback. For instance, a variable speed motor can be controlled to change speed to change airflow amount, in response to one or more inputs, as disclosed herein.

In some examples, the regulators are passively or mechanically actuated, such that a change in airflow opens or closes (fully or partially) the air pathway. The amount of airflow needed to cause the actuation can be determined by the specifications of the regulator, and/or adjusted by the operator to suit a particular activity. In some examples, the regulator can be biased in a closed (or open) position (e.g., via one or more springs), such that a threshold amount of pressure/airflow is required to change a position of the regulator (e.g., a valve), thereby changing the amount of airflow through the conduit.

In some examples, the welding tool 12A is a source capture fume gun, but can also be an vacuum nozzle, hood vent, and/or other device or system to receive fumes and/or particulates from a work environment at high vacuum.

In some additional or alternative examples, the boost system 16A can be connected to a second welding tool 12B. The second welding tool 12B can be connected to the boost system 16A in a similar manner, via regulators or valves 28A and conduit 18A. As such, the boost system 16A can activate and/or change motor speed based on changing airflow from both welding tools 12A and 12B. For instance, if the control circuitry 124 receives information that welding tool 12A has activated, the control circuitry 124 can command the motor 120 to activate at a first speed. If the control circuitry 124 then receives information that welding tool 12B has also been activated, the control circuitry 124 can command the motor 120 to activate at a second, greater speed.

In additional or alternative examples, an airflow valve 30 can be arranged at the outlet of the boost system 16A and the inlet of the ductwork 13. The control circuitry 124 can control the valve 30 in response to activity of the welding tools, or changes in airflow, as disclosed herein.

Although FIG. 4 illustrates a boost system 16A connected to two welding tools 12A and 12B, a single welding tool or three or more welding tools can be connected to a single boost system and operate as disclosed herein. Further, although a single boost system 16A is illustrated as connected/mounted to ductwork 13, in some examples, two or more boost systems can be connected to the ductwork 13, each connected to one or more welding tools and configured to operate as disclosed herein.

In some examples, a welding power supply 20, which may be contained within a housing (e.g., an enclosure). A boost system 16B can be arranged within the housing, configured to draw power from the power supply 20. For example, power can be supplied via direct connection with mains power, via connection with a work vehicle,from an engine driven power source, battery power, and/or an alternative power source, as a list of non-limiting examples). In some examples, the boost system can receive power from an auxiliary power source connected to and/or incorporated with the welding power source, such as a transformer, step down power supply, etc. In some examples, the boost system 16B can include a motor 120 to drive a fan 122, which is configured to draw in air from a welding tool 12A (e.g., a source capture fume gun, a nozzle, etc.).

The power supply 20 can include one or more couplings and/or outlets/inlets to connect with conduits 14 and 18, thereby providing a pathway for airflow from the welding tool 12A to the central ductwork 13. As shown, airflow regulators 28 and/or 30 are located at the couplings to open and/or close (fully or partially) the airflow pathways to regulate the airflow therethrough. In some examples, the regulators 28, 30 can be controlled remotely, such as by remote control of an actuator/solenoid, which can be responsive to an operator input (e.g., via a user interface at the power supply 20 and/or the welding tool 12A), and/or an automatic response to a trigger pull, change in power output (e.g., during a welding operation), and/or other change in condition. For example, one or more sensors 32 may be arranged at, near, and/or remote from the regulators to monitor changing conditions in airflow, at the power supply, and/or the welding tool. These conditions can include changes in pressure, airflow direction, temperature, as well as conditions at one or more components of the system (e.g., power output, an arc, etc.).

In some examples, the motor 120 can be controlled by the operator and/or sensor feedback. For instance, a variable speed motor can be controlled to change speed to change airflow amount, in response to one or more inputs, as disclosed herein.

In some examples, the regulators are passively or mechanically actuated, such that a change in airflow opens or closes (fully or partially) the air pathway. The amount of airflow needed to cause the actuation can be determined by the specifications of the regulator, and/or adjusted by the operator to suit a particular activity. In some examples, the regulator can be biased in a closed (or open) position (e.g., via one or more springs), such that a threshold amount of pressure/airflow is required to change a position of the regulator (e.g., a valve), thereby changing the amount of airflow through the conduit.

The boost system 16A, 16B enables the suction through the conduits 18, 18A to have an increased vacuum at lower volumes than the airflow through the central ductwork 13. In some examples, couplings connecting the conduits 14, 14A to the ductwork 13 are connected at an angle. For instance, the connections can be arranged such that the direction of airflow from the conduits 14, 14A into the ductwork 13 is at least partially in a same direction as the direction of airflow within the ductwork 13. In some examples, the connections are on the side or above the ductwork (relative to the ground).

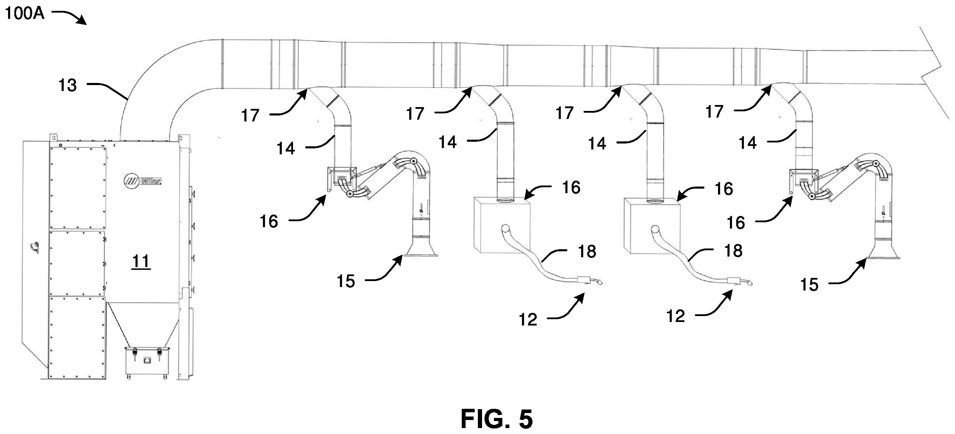

FIG. 5 illustrates another example fume extraction system 100A with multiple boost systems 16. As shown, the ductwork 13 from the centralized fume collector 11 is configured to receive conduits 14 from multiple systems. Further, the systems can be of various types, including fume arms 15 and source capture torches 12. Although four systems are provided in FIG. 5, three or fewer, or five or more, such systems or different systems can be connected in a manner similar to that shown. Moreover, other systems, such as the mounted boost pump and/or welding power supply illustrated in FIG. 4, can additionally or alternatively be connected, as disclosed herein.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Various embodiments of the invention are specified in the following clauses.

Clause 1. A fume evacuation system comprising:
a welding power supply contained within a housing; and
a boost system comprising a motor and a fan configured to draw in air from a source capture fume gun, the motor arranged within the housing.

Clause 2. The fume evacuation system of clause 1, wherein the housing comprises:
an air inlet to receive airflow from the source capture fume gun; and
an air outlet to expel the airflow from the housing.

Clause 3. The fume evacuation system of clause 1, wherein the air inlet is connected to the source capture fume gun via a first airflow conduit.

Clause 4. The fume evacuation system of clause 1, wherein the air outlet is connected to a centralized fume collection system via a second airflow conduit.

Clause 5. The fume evacuation system of clause 1, wherein the motor has a power of approximately 0.3-3 horsepower.

Clause 6. The fume evacuation system of clause 1, wherein the fan driven by the motor is capable of providing a volume flow rate between approximately 10-100 cubic feet per minute (CFM).

Clause 7. The fume evacuation system of clause 1, further comprising a valve to control airflow between the boost system and the source capture fume gun.

Clause 8. The fume evacuation system of clause 1, further comprising a valve to control airflow between the boost system and a centralized fume extraction system.

Clause 9. A fume evacuation system comprising:
a centralized fume collector;
one or more ducts extending from the fume collector, the ducts to receive airflow from a work environment; and
one or more boost systems arranged along the ducts to increase airflow through one or more of the ducts.

Clause 10. The fume evacuation system of clause 9, wherein the one or more boost systems include a motor and a fan configured to draw in air from an inlet or hose.

Clause 11. The fume evacuation system of clause 9, wherein the inlet or hose is connected to a source capture fume gun.

Clause 12. The fume evacuation system of clause 11, further comprising control circuitry configured to receive commands from the source capture fume gun to activate a first one of the one or more boost systems in response to initiation of a welding operation, optionally the fume evacuation system further comprises a sensor configured to generate and transmit the commands based on one or more measured parameters, and optionally the sensor is one or more of a voltage sensor, a current sensor, a heat sensor, a light sensor, an inductive sensor, a magnetic sensor, or a trigger.

Clause 13. The fume evacuation system of clause 9, further comprising a boost system housing for one of the one or more boost systems, the motor positioned within the boost system housing, and optionally the boost system housing is mounted to the one or more ducts.

Clause 14. The fume evacuation system of clause 9, wherein the fan driven by the motor is capable of providing a volume flow rate between approximately 35 cubic feet per minute (CFM).

Clause 15. The fume evacuation system of clause 9, wherein the fan driven by the motor is capable of providing a volume flow rate between approximately 35 cubic feet per minute (CFM) at each of a plurality of welding tools connected to the one or more boost pumps.

## Claims

1. A fume evacuation system comprising:
a welding power supply contained within a housing; and
a boost system comprising a motor and a fan configured to draw in air from a source capture fume gun, the motor arranged within the housing.

2. The fume evacuation system of claim 1, wherein the housing comprises:
an air inlet to receive airflow from the source capture fume gun; and
an air outlet to expel the airflow from the housing.

3. The fume evacuation system of claim 1, wherein the air inlet is connected to the source capture fume gun via a first airflow conduit.

4. The fume evacuation system of claim 1, wherein the air outlet is connected to a centralized fume collection system via a second airflow conduit.

5. The fume evacuation system of claim 1, wherein the motor has a power of approximately 0.3-3 horsepower.

6. The fume evacuation system of claim 1, wherein the fan driven by the motor is capable of providing a volume flow rate between approximately 10-100 cubic feet per minute (CFM).

7. The fume evacuation system of claim 1, further comprising a valve to control airflow between the boost system and the source capture fume gun.

8. The fume evacuation system of claim 1, further comprising a valve to control airflow between the boost system and a centralized fume extraction system.

9. A fume evacuation system comprising:
a centralized fume collector;
one or more ducts extending from the fume collector, the ducts to receive airflow from a work environment; and
one or more boost systems arranged along the ducts to increase airflow through one or more of the ducts.

10. The fume evacuation system of claim 9, wherein the one or more boost systems include a motor and a fan configured to draw in air from an inlet or hose.

11. The fume evacuation system of claim 9, wherein the inlet or hose is connected to a source capture fume gun.

12. The fume evacuation system of claim 11, further comprising control circuitry configured to receive commands from the source capture fume gun to activate a first one of the one or more boost systems in response to initiation of a welding operation, optionally the fume evacuation system further comprises a sensor configured to generate and transmit the commands based on one or more measured parameters, and optionally the sensor is one or more of a voltage sensor, a current sensor, a heat sensor, a light sensor, an inductive sensor, a magnetic sensor, or a trigger.

13. The fume evacuation system of claim 9, further comprising a boost system housing for one of the one or more boost systems, the motor positioned within the boost system housing, and optionally the boost system housing is mounted to the one or more ducts.

14. The fume evacuation system of claim 9, wherein the fan driven by the motor is capable of providing a volume flow rate between approximately 35 cubic feet per minute (CFM).

15. The fume evacuation system of claim 9, wherein the fan driven by the motor is capable of providing a volume flow rate between approximately 35 cubic feet per minute (CFM) at each of a plurality of welding tools connected to the one or more boost pumps.
